# EUROPEAN PATENT APPLICATION

(11) **EP 3 187 911 A1**
(43) Date of publication of application: **05.07.2017**
(21) Application number: 14891121.7
(22) Date of filing: 28.11.2014
(51) Int. Cl.: G02B 5/30, G02F 1/1335, G02F 1/1333

(54) **POLAROID AND TOUCH MODULE**

(30) Priority: 22.08.2014 CN 201410418614
(71) Applicant: BOE Technology Group Co., Ltd., Beijing 100015 (CN); BOE (Hebei) Mobile Display Technology Co., Ltd., Gu'An Hebei 065500 (CN)
(72) Inventor: YIN, Ertao, Beijing 100176 (CN); SONG, Yangyang, Beijing 100176 (CN); XIE, Chaozhi, Beijing 100176 (CN)
(74) Representative: Klunker IP Patentanwälte PartG mbB
(86) International application number: PCT/CN2014/092483
(87) International publication number: WO 2016/026232

(57) **Abstract**

A polarization sheet and a touch sensing module are disclosed, the polarization sheet includes a touch sensing layer (1), by which the interference between the touch sensing layer and the display module can be avoided. The polarization sheet can be used in the touch sensing module.

## Description

### TECHNICAL FIELD

The embodiments of the present invention relates to a polarization sheet and a touch sensing module.

### BACKGROUND

There are many kinds of touch panel technologies, mainly including resistive-type, capacitive-type, infrared type, surface acoustic wave type, and so on. In these technologies, the capacitive type touch panel is operated by sensing the variation of capacitance formed between a conductive sensing pattern and an adjacent sensing pattern, a ground electrode, and so on when a finger of a user or an object contacts with the touch panel, so that the touch position is converted into an electrical signal. The capacitive type touch panel is a new generation touch product following the resistive type touch panel, and it is advantageous due to the better performance, more sensitive response, supporting multi-points touch, and long service life. Currently, the capacitive type touch panel becomes predominated in the touch product market.

The capacitive type touch panel is generally composed by combining a touch sensing layer and a display module. For example, in an on-cell touch sensing module, generally, the touch sensing layer is provided between a color filter substrate of the display module and a polarization sheet; in this case, a color filter of the color filter substrate and the touch sensing layer are prepared on the same one glass substrate, and thus the glass substrate will be relative thick and cause the whole touch sensing module relatively thicker, and the touch sensing layer is separated from devices in the display module and will certainly interfere with the display module. For the same reason, in an in-cell touch sensing module, the touch sensing layer is integrated into the liquid crystal cell of the display module, but there is still interference between the touch sensing layer and the display module. In a certain sense, the touch sensing layer is still separated from the devices of the display module. In a one-glass-solution (OGS) touch sensing module, the touch sensing layer is made on a cover glass, and therefore, in an on-cell mode touch sensing module, an in-cell mode touch sensing module or an OGS mode touch sensing module, the touch sensing layer are all separated from the devices of the display module, thus there would be interference between the touch sensing layer and the display panel.

### SUMMARY

At least one embodiment of the present invention provides a polarization sheet and a touch sensing module by which the interference generated between the touch sensing layer and the display module can be avoided.

At least one embodiment of the present invention provides a polarization sheet comprising a touch sensing layer.

For example, the polarization sheet may also include an original film layer of the polarization sheet and an adhesive layer for adhering the original film layer of the polarization sheet with a display substrate, and the touch sensing layer is provided between the original film layer of the polarization sheet and the adhesive layer.

For example, the polarization sheet may also include an original film layer of the polarization sheet, and a fist support layer and a second support layer provided at opposite sides of the original film layer of the polarization sheet for supporting the original film layer of the polarization sheet. The touch sensing layer is provided between the original film layer of the polarization sheet and the first support layer, or the touch sensing layer is provided between the original film layer of the polarization sheet and the second support layer.

Furthermore, for example, the polarization sheet may further include a adhesive layer contacting with a surface of the first support layer away from the original film layer of the polarization sheet, a separation film layer adhered on a surface of the adhesive layer, and a protection film layer provided on a surface of the second support layer away from the original film layer of the polarization sheet.

For example, the polarization sheet may also include an original film layer of the polarization sheet, and a first support layer and a second support layer provided at opposite sides of the original film layer of the polarization sheet for supporting the original film layer of the polarization sheet. The first support layer is provided with an adhesive layer on a side away from the original film layer of the polarization sheet, and the touch sensing layer is provided between the first support layer and the adhesive layer.

Furthermore, for example, the polarization sheet may also include a protection film layer provided on a surface of the second support layer away from the original film layer of the polarization sheet, and a separation film layer adhered on a surface of the adhesive layer away from the first support layer.

For example, the polarization sheet may also include an original film layer of the polarization sheet, a first adhesive layer, and the touch sensing layer is adhered with the original film layer of the polarization sheet by the first adhesive layer.

For example, the polarization sheet may also include an original film layer of the polarization sheet, the touch sensing layer is provided in the original film layer of the polarization sheet.

For example, material for the original film layer of the polarization sheet may be polyvinyl alcohol.

For example, material for the first support layer and the second support layer may be tri acetyl cellulose.

For example, material for the first adhesive layer may be pressure sensitive adhesive.

### DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.

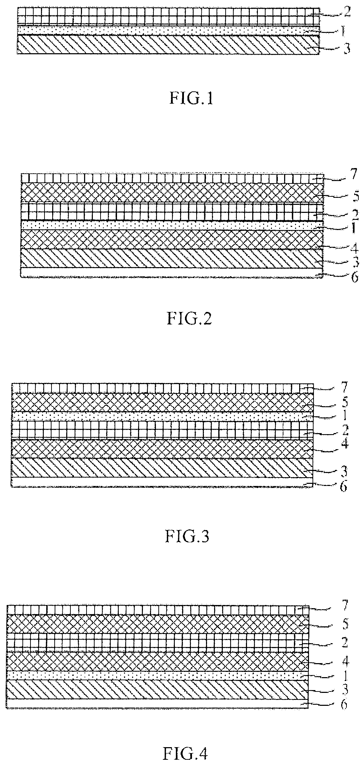

FIG. 1 to FIG. 6 are six structural views of the polarization sheets according to the embodiments of the present invention.

### Reference Numerals:

1: touch sensing layer; 2: original film layer of the polarization sheet, 3: adhesive layer, 3-1, first adhesive layer, 4: first support layer, 5: second support layer, 6: separation film layer, 7: second film layer.

### DETAILED DESCRIPTION

In order to make objects, technical details and advantages of the embodiments of the invention apparent, the technical solutions of the embodiments will be described in a clearly and fully understandable way in connection with the drawings related to the embodiments of the invention. Apparently, the described embodiments are just a part but not all of the embodiments of the invention. Based on the described embodiments herein, those skilled in the art can obtain other embodiment(s), without any inventive work, which should be within the scope of the invention.

An embodiment of the present invention provides a polarization sheet, the polarization sheet includes a touch sensing layer, that is, the polarization sheet of the present embodiment not only has the function that the polarization sheet originally has, but also has touch sensing function, in the present embodiment, the polarization sheet having polarization function is combined with the touch sensing layer having touch sensing function, to form a new touch sensing polarization sheet, by which the problem that the touch sensing layer and the display module interfere with each other caused by the separation of the components of the display module from the touch sensing layer can be effectively resolved. Hereinafter, the structure of the polarization sheet according to the present embodiment will be described in detail.

As shown in FIG. 1, as one example of the present embodiment, the polarization sheet includes an original film layer 2 of the polarization sheet, an adhesive layer 3, a touch sensing layer 1; the touch sensing layer 1 is provided between the original film layer 2 of the polarization sheet and the adhesive layer 3, and the adhesive layer 3 is used to adhere the polarization sheet to a display substrate (not shown) of the display module.

As shown in FIG. 2 and FIG. 3, as one example of the present embodiment, the polarization sheet includes an original film layer 2 of the polarization sheet, and a first support layer 4 and a second support layer 5 provided at opposite sides of the original film layer 2 for supporting the original film layer 2. The touch sensing layer 1 is provided between the original film layer 2 of the polarization sheet and the first support layer 4 (as shown in FIG. 2), or the touch sensing layer 1 is provided between the original film layer 2 of the polarization sheet and the second support layer 5 (as shown in FIG. 3). For example, the polarization sheet further includes an adhesive layer 3 contacting with a surface of the first support layer 4 away from the original film layer 2 of the polarization sheet, a separation film layer 6 adhered on a surface of the adhesive layer 3, and a protection film layer 7 provided on a surface of the second support layer 5 away from the original film layer 2 of the polarization sheet. When the polarization sheet is adhered to the display module, the separation film layer 6 is peeled off, and the separation film layer 6 has low peeling off strength. The protection film layer 7 has anti-electrostatic and low peeling off strength characteristics, and is used to protect the polarization sheet from being scratched.

As shown in FIG. 4, as one example of the present embodiment, the polarization sheet includes an original film layer 2 of the polarization sheet, and a first support layer 4 and a second support layer 5 provided at opposite sides of the original film layer 2 of the polarization sheet for supporting the original film layer 2 of the polarization sheet; the first support layer 4 is provided with an adhesive layer 3 on a side thereof away from the original film layer 2 of the polarization sheet, and the touch sensing layer 1 is provided between the first support layer 4 and the adhesive layer 3. For example, the polarization sheet may further include a protection film layer 7 provided on a surface of the second support layer 5 away from the original film layer 2 of the polarization sheet, and a separation film layer 6 adhered to a surface of the adhesive layer 3 away from the first support layer 4. It is to be noted that this example is similar to the above example except the position of the film layers of the polarization sheet, and thus will not be further described.

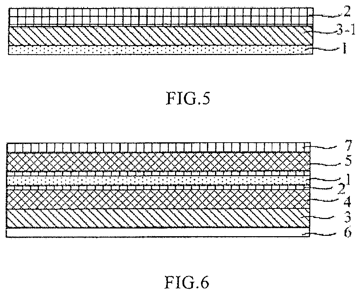

As shown in FIG. 5, as one example of the present embodiment, the polarization sheet includes an original film layer 2 of the polarization sheet, and a first adhesive layer 3-1, the touch sensing layer 1 is adhered to the original film layer 2 of the polarization sheet by the first adhesive layer 3-1. When the polarization sheet is adhered to the display substrate, an adhesive layer may be further formed on the touch sensing layer 1 to be adhered with the display substrate, and of course, or a layer of adhesive layer may be formed on the display substrate to be adhered with the polarization sheet. The polarization sheet in the present embodiment may also include a first support layer 4, a second support layer 5, a protection film layer 7, as in the above example, and the first support layer 4 and the second support layer 5 are provided at opposite sides of the original film layer 2 of the polarization sheet, the first adhesive layer 3 is provided on a surface of the first support layer 4 away from the original film layer 2 of the polarization sheet, and the protection layer 7 is provided on a surface of the second support layer 5 away from the original film layer 2 of the polarization sheet. When the touch sensing layer 1 is formed with the adhesive layer 3 for adhering with the display module, a separation film layer 6 having low peeling off strength characteristics may also be formed on the adhesive layer 3.

As shown in FIG. 6, as one case of the present embodiment, the polarization sheet includes an original film layer 2 of the polarization sheet, the touch sensing layer 1 is provided in the original film layer 2 of the polarization sheet, that is to say, the touch sensing layer 1 is merged into the original film layer 2. Of course, the polarization sheet may also include a first support layer 4, a second support layer 5, a protection film layer 7, a separation film layer 6, as in the above example, and the positions of the film layers are identical with those in the above example, and thus will not be further described.

For example, the material for the above original film layer 2 of the polarization sheet is high molecule polymer polyvinyl alcohol (PVA). Such polymer polyvinyl alcohol is dyed with any kinds of organic dichroism dyes and further stretched/extruded at a condition of certain humidity and temperature, the polymer polyvinyl alcohol is accorded with polarization performance by absorbing the dichroism dyes, and after being dehydrated and dried, forms the original film layer of the polarization sheet.

For example, the material for the first support layer 4 and the second support layer 5 is tri-acetyl cellulose (TAC). Since the original film layer 2 of the polarization sheet has hydrophilic characteristics, will be quickly deformed, shrunk, loosen, degraded quickly in a humid and hot environment, and has low strength, is brittle and difficult to use and treat, the first support layer 4 and the second support layer 5 having high strength, high transmittance, and humid and hot resistance are combined at both sides of the original film layer, meantime, the first support layer 4 and the second support layer 5 also absorb the UV light which is harmful to the liquid crystal.

For example, the above adhesive layer 3 and the first adhesive layer 3 both employ pressure sensitive adhesive, and have characteristics such as low light leakage and multiple usage, and can be used to adhere with the display substrate.

At least one embodiment of the present invention provide a touch sensing module including the above polarization sheet, since the above polarization sheet includes a touch sensing layer 1, the touch sensing module according to at least one embodiment of the present invention integrates the touch sensing layer 1 into the polarization sheet of the display module, and thus the problem of interference with a display module caused by separation of the touch sending layer 1 frog the display module can be resolved.

The present disclosure has been described above by way of the exemplary embodiment, and the protection scope of the present disclosure would not be limited therein, and is only defmed by the following claims.

The present application claims the priority of Chinese Patent Application No. 201410418614.1 filed on August 22, 2014, the Chinese Patent Application is entirely incorporated therein by reference as a part of the present application.

## Claims

1. A polarization sheet comprising a touch sensing layer.

2. The polarization sheet according to claim 1, further comprising:
an original film layer of the polarization sheet; and
an adhesive layer for adhering the original film layer of the polarization sheet with a display substrate,
wherein the touch sensing layer is provided between the original film layer of the polarization sheet and the adhesive layer.

3. The polarization sheet according to claim 1, further comprising:
an original film layer of the polarization sheet; and
a first support layer and a second support layer provided at opposite sides of the original film layer of the polarization sheet for supporting the original film layer of the polarization sheet,
wherein the touch sensing layer is provided between the original film layer of the polarization sheet and the first support layer; or the touch sensing layer is provided between the original film layer of the polarization sheet and the second support layer.

4. The polarization sheet according to claim 3, further comprising:
an adhesive layer contacting with a surface of the first support layer away from the original film layer of the polarization sheet;
a separation film layer adhered on a surface of the adhesive layer; and
a protection film layer provided on a surface of the second support layer away from the original film layer of the polarization sheet.

5. The polarization sheet according to claim 1, further comprising:
an original film layer of the polarization sheet; and
a first support layer and a second support layer provided at opposite sides of the original film layer of the polarization sheet for supporting the original film layer of the polarization sheet,
wherein an adhesive layer is provided at a side of the first support layer away from the original film layer of the polarization sheet, and the touch sensing layer is provided between the first support layer and the adhesive layer.

6. The polarization sheet according to claim 5, further comprising:
a protection film layer provided on a surface of the second support layer away from the original film layer of the polarization sheet; and
a separation film layer adhered on a surface of the adhesive layer away from the first support layer.

7. The polarization sheet according to claim 1, further comprising an original film layer of the polarization sheet and a first adhesive layer,
wherein the touch sensing layer is adhered with the original film layer of the polarization sheet by the first adhesive layer.

8. The polarization sheet according to claim 1, further comprising an original film layer of the polarization sheet, wherein the touch sensing layer is provided in the original film layer of the polarization sheet.

9. The polarization sheet according to any one of claims 2 to 8, wherein a material for the polarization sheet is polyvinyl alcohol.

10. The polarization sheet according to any one of claims 3 to 6, wherein a material for the first support layer and the second support layer is tri-acetyl cellulose.

11. The polarization sheet according to any one of claims 2, 4-6, wherein a material for the adhesive layer is pressure-sensitive adhesive.

12. The polarization sheet according to claim 7, wherein a material for the first adhesive layer is pressure-sensitive adhesive.

13. A touch sensing module, comprising the polarization sheet according to any one of claims 1 to 12.
